# EUROPÄISCHE PATENTSCHRIFT

(11) **EP 1 977 487 B1**
(45) Veröffentlichungstag und Bekanntmachung des Hinweises auf die Patenterteilung: **31.08.2011**
(21) Anmeldenummer: 07704102.8
(22) Anmeldetag: 23.01.2007
(51) Int. Cl.: H02B 1/01

(54) **GERÄTETRÄGER**
DEVICE SUPPORT
PORTE-APPAREILLAGE

(30) Priorität: 23.01.2006 DE 102006003349
(43) Veröffentlichungstag der Anmeldung: 08.10.2008
(73) Patentinhaber: BSW ANLAGENBAU GMBH, 48351 Everswinkel (DE)
(72) Erfinder: NIENTIEDT, Klaus, 48157 Münster (DE); LÜTKE ZUTELGTE, Albert, 48291 Telgte (DE)
(74) Vertreter: Tarvenkorn, Oliver
(86) Internationale Anmeldenummer: PCT/EP2007/050670
(87) Internationale Veröffentlichungsnummer: WO 2007/082962

(56) Entgegenhaltungen:
- WO-A-94/14307
- DE-A1- 4 119 435
- GB-A- 2 212 879
- US-A- 4 610 561
- US-A- 4 691 970

## Beschreibung

Die vorliegende Erfindung betrifft einen Geräteträger, aufweisend ein aus metallischen Hohlprofilen gebildetes, quaderförmiges Schrankgerüst, das an mindestens einer seiner Ecken ein quaderförmiges Eckverbinderelement aufweist, das mit mindestens einem der Hohlprofile über eine Schraubverbindung verbunden ist, wobei wenigstens eine Außenseite des Eckverbinderelements als Befestigungsseite ausgebildet sind, die jeweils wenigstens einen Führungsabsatz mit wenigstens zwei parallelen Außenkanten aufweist, welche an Innenmantelflächen des Hohlprofils anliegen.

Ein solches Schrankgerüst für einen Geräteträger ist aus der PCT/WO94/14307 bekannt. Die Verbindung von Eckverbinderelementen und Hohlprofilen über Schrauben ermöglicht eine modulare Bauweise und beansprucht im Vergleich zu nicht zerlegbaren Schweißkonstruktionen deutlich weniger Lager- und Transportraum. Die Profile sind jedoch als offene Profile ausgebildet, die eine entsprechend geringe Torsionssteifigkeit besitzen. Schraubverbindungen sind durch Gewindebohrungen in den Eckverbinderelementen und Schrauben gebildet, die aus dem Profil heraus in das Eckverbinderelement eingeschraubt werden. Um die Schraubenköpfe zugänglich zu machen, sind die Profile sogar an zwei aneinander grenzenden Flächen über Eck ausgeklinkt, was die Biege- wie Torsionssteifigkeit stark mindert. Die Schraubenköpfe sind aber dennoch schwer zugänglich, da ein Schraubwerkzeug nur sehr beengt zum Einsatz gebracht werden kann. Vor Montage lackierte Hohlprofile müssen über Massebänder verbunden werden, um einen elektrischen Potentialausgleich zu schaffen.

Ein weiteres Schrankgerüst ist aus GB 2 212 879 bekannt.

Aufgabe der vorliegenden Erfindung ist es daher, einen Geräteträger mit einem Schrankgerüst der eingangs genannten Art so zu verbessern, dass eine einfachere und schnellere Montage und höhere Steifigkeit gegeben ist.

Diese Aufgabe wird durch einen Geräteträger mit den Merkmalen des Anspruchs 1 gelöst.

Durch die Führungsabschnitte werden quer zur jeweiligen Profilachse wirkende Kräfte aufgenommen, so dass somit die Schraubverbindungen nicht durch Schubspannungen belastet werden.

Durch die Durchführung der Schrauben von außen durch das Eckverbinderelement bis in das Hohlprofil hinein ist eine gute Zugänglichkeit der Schrauben gegeben. Durch die Möglichkeit einer sehr einfachen und schnellen Montage wie Demontage ergeben sich erhebliche Vorteile bei der Lagerung und beim Transport. Aus den vorlackierten Profilen können "on demand" die gewünschten Schränke zusammengebaut werden, und zwar entweder beim Hersteller oder bereits vor Ort durch den Abnehmer. Dies erhöht die Flexibilität und verkürzt die Reaktionszeiten. Gleichzeitig reduzieren sich die Lager-und/oder die Transportkosten, da nicht fertig montierte Schränke gelagert werden müssen, sondern es ausreichend ist, die fertig lackierten Profile zu lagern. Ebenso müssen nicht fertig montierte Schränke transportiert werden sondern es können die wesentlich kleiner verpackbaren Komponenten transportiert und vor Ort schnell und unkompliziert zu einem fertigen Geräteträger sehr hoher Steifigkeit zusammengebaut werden.

In einer besonders bevorzugten Ausgestaltung bestehen die erfindungsgemäßen Eckverbinderelement aus quaderförmigen, insbesondere aus würfelförmigen Elementen, die in mindestens einer Raumachse eine Durchführungsausnehmung für die Schrauben aufweisen. Besonders bevorzugt finden sich diese Durchführungsausnehmungen dabei in allen drei Raumachsen. Die Durchführungen sind bevorzugt so ausgestaltet, dass sie auf der Befestigungsseite, die dem Hohlprofil zugewandt ist, einen kleineren Durchmesser aufweisen als auf der dem betreffenden Profil abgewandten Außenseite. Der Übergang dient in diesem Falle als Lager für den Schraubenkopf, und es können so große Vorspannungen in die Aufnahmen für die Befestigungseinrichtungen eingebracht werden.

Im Falle zweier rechtwinklig zueinander ausgerichteter Befestigungsseiten und wenigstens zweier sich kreuzender Durchführungsausnehmungen ist es unter dem Aspekt der einfachen Montage besonders vorteilhaft, wenn die Tiefe wenigstens einer der Durchführungsausnehmungen zwischen dem jeweiligen Auflagerabsatz und der Hüllkurve der kreuzenden Durchführungsausnehmung wenigstens der Höhe des Schraubenkopfes entspricht. Dies bedeutet, dass bei ein oder zwei bereits eingesetzten Schrauben eine weitere Schraube unbehindert in das Eckverbinderelement eingeführt werden und mit einem ebenfalls einführbaren Werkzeug, wie beispielsweise einem Innensechskantschlüssel, angezogen werden kann. Eine bestimmte Montagereihenfolge muss nicht eingehalten werden, sofern keine übergroßen Schraubenköpfe verwendet werden.

Ein solcher übergroßer Schraubenkopf ist so ausgestaltet, dass er die Durchführungsausnehmung im Eckverbinderelement hinsichtlich Länge und Durchmesser vollständig ausfüllt und dass er eine innere Ausnehmung aufweist, die an der dem Schraubenschaft zugewandten Seite als Innenantrieb, beispielsweise als Innensechskant oder Innenvielzahn, ausgebildet ist und die darüberliegend wenigstens teilweise mit einem Innengewinde versehen ist. Damit wird nicht nur die Verbindung zu einem Hohlprofil hergestellt, sondern es ist auch noch das Einschrauben von Ösen, Haken oder Stellfüßen möglich. Auf dieser Weise kann ein entsprechend ausgestalteter Geräteträger z.B. kranfähig gemacht werden. Die dabei auftretenden Zugkräfte werden direkt in die senkrecht angeordneten Profile des quaderförmigen Schrankgerüsts eingeleitet und beanspruchen damit die Schrauben nur auf Zug. Beim Einsetzen von Stellfüßen an der Unterseite werden Gewichtskräfte über die senkrechten Hohlprofile direkt auf die Füße abgeleitet, ohne dass die unteren quer liegenden Hohlprofile auf Biegung beansprucht werden.

Vorzugsweise besitzt das separat einsetzbare Aufnahmeelement an seiner dem Eckverbinderelement zugewandten Fläche eine gezackte Profilierung und/oder die dem Eckverbinderelement benachbarte Kante der Einsatzausnehmungen ist wenigstens teilweise gezackt. Hierdurch wird eine Lackschicht auf den Hohlprofilen und dessen Kanten im Bereich der Einsatzausnehmungen durchstoßen, wenn die Schraubverbindung angezogen wird und damit das Aufnahmeelement an die Kante gepresst wird. Dickere, spröde Schutzbeschichtungen, wie beispielsweise Pulverlackbeschichtungen oder Eloxierungen, platzen durch die gezackte Profilierung partiell ab, so dass ein elektrisch leitfähiger Kontakt hergestellt wird. Selbst wenn die stirnseitigen Kanten des Hohlprofils, die an dem Eckverbinderelement anliegen, mit einer elektrisch isolierenden Beschichtung versehen sind, wird dennoch über die in die Gewindebohrung eingreifende Schraube ein Kurzschluss mit dem Eckverbinderelement hergestellt, welches vorzugsweise blank bleibt. Es ist damit nicht mehr erforderlich, die einzelnen Hohlprofile über Massebänder zu verbinden. Damit können die für das erfindungsgemäße Schrankgerüst verwendeten Profile bereits vor dem Zusammenbau lackiert werden. Es muss also nicht mehr das komplett montierte Schrankgerüst lackiert werden, sondern nur noch die einzelnen Profile. Lackieranlagen, können wesentlich kleiner dimensioniert werden, was zu einer erheblichen Kostenersparnis bei der Fertigung führt.

In einer bevorzugten Ausgestaltung ist vorgesehen, dass die Eckverbinderelemente jeweils mit mindestens drei Profilen verbunden sind, die in jeweils andere Dimensionen des Raumes weisen, so dass ein dreidimensionaler Geräteträgern entsteht, der nachfolgend als Geräteschrank bezeichnet wird.

In einer besonders bevorzugten Ausgestaltung des erfindungsgemäßen Geräteschranks ist vorgesehen, dass an den vier oberen Ecken des quaderförmigen Schrankgerüsts jeweils Eckverbinderelemente angeordnet sind, die mit jeweils drei Profilen über eine Schraubverbindung verbunden sind, während im unteren Bereich des quaderförmigen Schrankgerüsts ein rechteckiger Grundrahmen vorgesehen ist, dessen vier Ecken jeweils über eine Schweiß- oder Schraubverbindung mit einem senkrecht angeordneten Profil des quaderförmigen Schrankgerüsts verbunden sind. Ein solcher Geräteschrank weist eine besonders hohe Standfestigkeit auf, da der Grundrahmen besonders schwer und massiv ausgeführt sein kann.

In einer besonders bevorzugten Ausgestaltung des erfindungsgemäßen Geräteschranks ist vorgesehen, dass an allen acht Ecken des quaderförmigen Schrankgerüsts jeweils Eckverbinderelemente angeordnet sind, die mit jeweils drei Profilen über eine Schraubverbindung verbunden sind.

Bevorzugt sind die im Inneren der Profile angeordneten Aufnahmeelemente für die Schrauben so ausgestaltet, dass sich beim Eindrehen der Befestigungseinrichtungen Vorspannungen in die Aufnahmen einbringen lassen. Diese Aufnahmen bestehen beispielsweise aus in den Profilen angeordneten rechteckigen Querblechen, die jeweils eine Bohrung mit Innengewinde aufweisen. Die Querbleche können jeweils an ihren schmalseitigen Enden an der Innenwand der Profile z.B. über Schweißverbindungen befestigt sein. Beim Eindrehen der Befestigungseinrichtungen wird dabei eine Vorspannung in die Querbleche eingebracht, die die Profile stärker an die Eckverbinderelement heranzieht und so zu einer erheblich höheren Steifigkeit der Verbindung und damit des gesamten Geräteschranks führt. Die Steifigkeit solchermaßen hergestellter Geräteschränke übertrifft sogar die von geschweißten Schränken.

Der erfindungsgemäß ausgestaltete Geräteschrank kann weiterhin eine an das Schrankgerüst gehängte Verkleidungsplatte aufweisen, wobei die Verkleidungsplatte mit wenigstens einer Sicherungslasche versehen ist, die Sicherungslasche über eine umlaufende Seitenkante der Verkleidungsplatte hinausragt, und die Sicherungslasche auf einer Außenfläche des Profils des Schrankgerüstes aufliegt. Die genaue Ausgestaltung dieser verkleidungsplatte und ihrer Aufhängung ist aus dem deutschen Gebrauchsmuster DE 200 188 18 der Anmelderin der vorliegenden Erfindung bekannt. Auf den Offenbarungsgehalt der DE 200 188 18 wird vorliegend ausdrücklich Bezug genommen, und dieser wird der Offenbarung der vorliegenden Anmeldung zugerechnet.

Die Erfindung wird nachfolgend mit Bezug auf die Zeichnungen näher erläutert. Die Figuren zeigen im Einzelnen:
- Fig. 1: ein erstes quaderförmiges Schrankgerüst für einen erfindungsgemäßen Geräteschrank mit Eckverbinderelementen an allen acht Ecken;
- Fig. 2: ein Schrankgerüst für einen erfindungsgemäßen Geräteschrank mit Eckverbinderelementen an den oberen Ecken sowie im unteren Bereich ei- nen rechteckigen Grundrahmen;
- Fig. 3a: eine perspektivische Ansicht eines Eckverbin- derelements;
- Fig. 3b: einen Schnitt durch ein Eckverbinderelement;
- Fig. 4a: eine Eckverbindung in Explosionsansicht;
- Fig. 4b: die montierte Eckverbindung aus Fig. 4b;
- Fig. 5: eine Schnittsansicht einer Schraubver- bindung für einen Geräte- schrank, die nicht Teil der Erfindung ist, und
- Fig. 6: eine Schraubverbindung für einen er- findungsgemäßen Geräteschrank in einer Explo- sionsdarstellung.

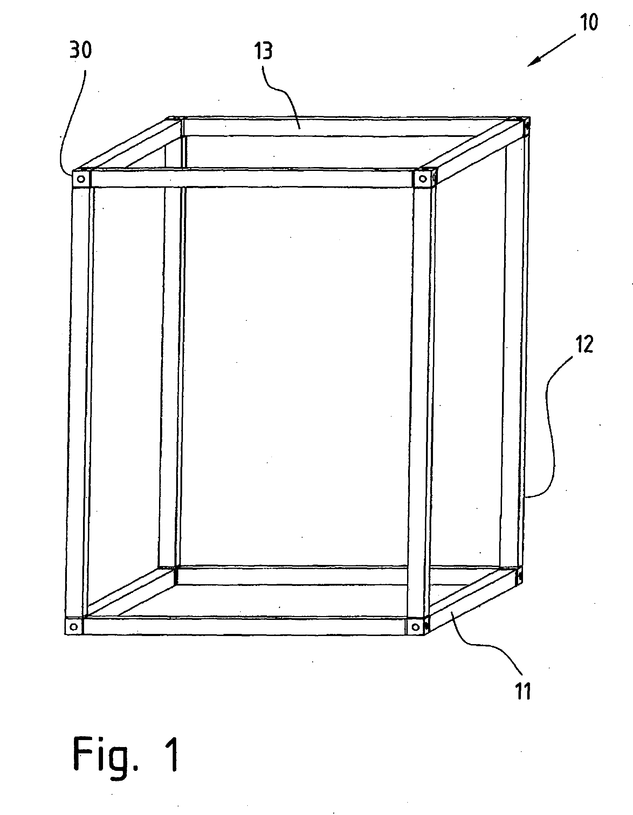

Figur 1 zeigt ein erstes Schrankgerüst 10 für einen erfindungsgemäßen Geräteträger mit Hohlprofilen 11, 12, 13 sowie Eckverbinderelementen 30. Das Schrankgerüst umfasst insgesamt acht Eckverbinderelemente 30 sowie zwölf Hohlprofile. Die Eckverbinderelemente 30 sind mit den Profilen über Schraubverbindungen verbunden. Da eine räumliche Struktur ausgebildet wird, wird der Geräteträger nachfolgend als Geräteschrank bezeichnet.

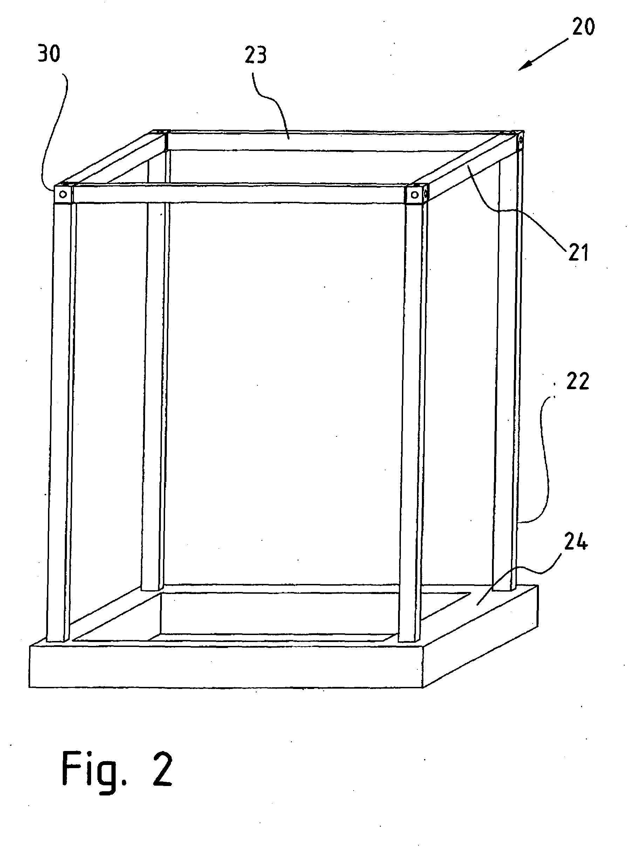

Figur 2 zeigt ein zweites quaderförmiges Schrankgerüst 20 mit einem rechteckigen Grundrahmen 24, dessen vier Ecken jeweils über eine Schweiß- oder Schraubverbindung mit einem senkrecht angeordneten Hohlprofil 22 des quaderförmigen Schrankgerüsts 20 verbunden sind. An den vier oberen Ecken des quaderförmigen Schrankgerüsts 20 sind jeweils Eckverbinderelemente 30 angeordnet, die mit den senkrechten Hohlprofilen 22 und Hohlprofilen 21, 23, die einen oberen Rahmen des Schrankgerüsts bilden, über Schraubverbindungen verbunden sind.

Der Grundrahmen 21 kann in seiner Dimensionierung so gestaltet sein, dass er ein großes Gewicht und/oder eine breite Standfläche aufweist und dem Schrankgerüst 20 auf diese Weise eine hohe Standfestigkeit verleiht.

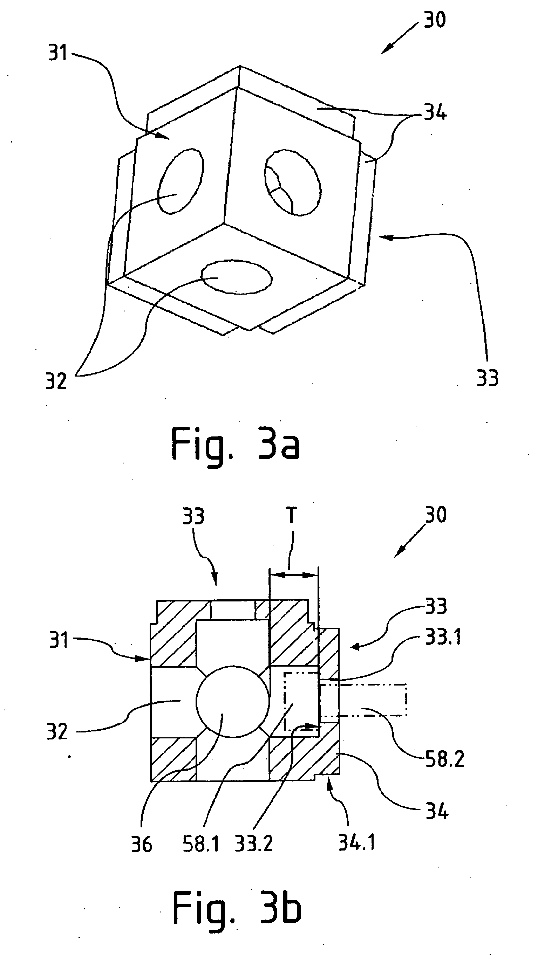

Figur 3a zeigt ein Eckverbinderelement 30 für ein Schrankgerüst für einen erfindungsgemäßen Geräteschrank in einer perspektivischen Ansicht. Das Eckverbinderelement ist ein im Wesentlichen würfelförmiger Grundkörper, der in jeder seiner Raumachsen eine Durchführungsausnehmung 32 aufweist, die sich von einer Außenseite 31 ins Innere erstreckt. Das Eckverbinderelement 30 weist überdies auf seinen Befestigungsseiten Führungsabsätze 34 auf, die dem Innenquerschnitt der Hohlprofile des quaderförmigen Schrankgerüstes angepasst sind und in diese eingeführt werden können.

Figur 3b zeigt das Eckverbinderelement 30 im Schnitt. Von der Befestigungsseite 33 führt eine Durchgangsbohrung 33.1 für einen Schraubenschaft 58.2 bis zu einem Auflagerabsatz 33.2 für einen Schraubenkopf 58.1. Durch die sich schneidenden Durchführungsausnehmungen 32 ist ein zentraler Hohlraum 36 ausgebildet. Dadurch, dass eine Tiefe T zwischen dem Hohlraum 36 dem Auflagerabsatz 33.2 größer ist als die Höhe des Schraubenkopfes 58.1, bleiben die Durchführungsausnehmungen der jeweils anderen Raumachsen stets zugänglich, selbst wenn in der Durchführungsausnehmung 32 einer der Raumachsen bereits eine Schraube 58 eingesetzt ist.

Die seitlichen Außenkanten 34.1 am Führungsabsatz 34 springen entsprechend der Wandstärke des vorgesehenen Hohlprofils gegenüber den Außenseiten des Eckverbinderelements 30 zurück, so dass ein stufenloser Übergang vom Hohlprofil auf das Eckverbinderelement erfolgt.

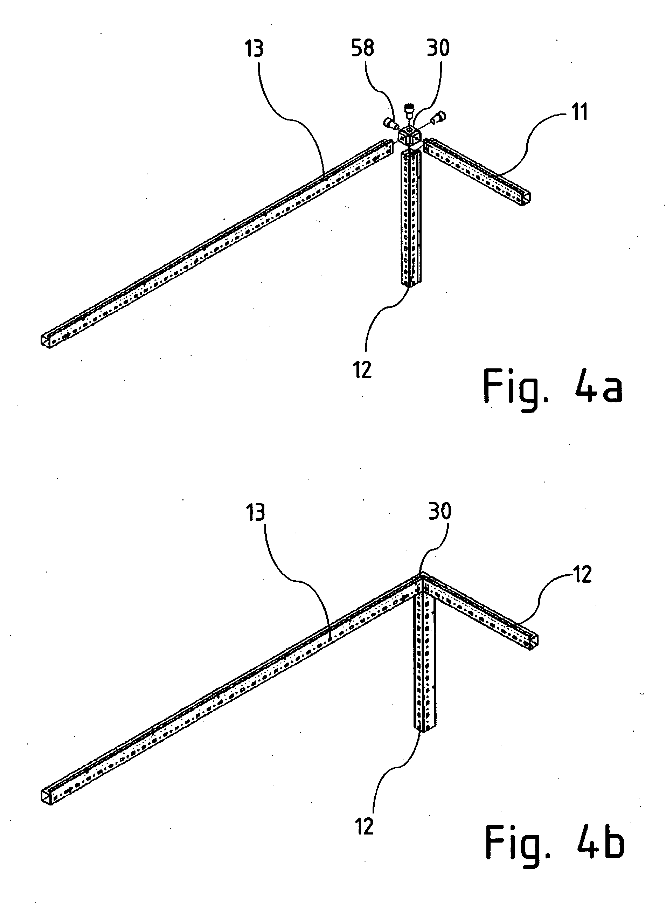

Figur 4a zeigt den Aufbau einer Eckverbindung des Schrankgerüsts aus Fig. 1 in Explosionsansicht mit den Hohlprofilen 11, 12, 13, die in jeweils unterschiedliche Raumachsen weisen, sowie dem würfelförmigen Eckverbinderelement 30 und den durch die Durchführungsausnehmungen 32 des Eckverbinderelements hindurchführbaren Schrauben 58. Im Inneren der Hohlprofile 11, 12 und 13 sind an der dem Eckverbinderelement 30 zugewandten Seite Aufnahmeelemente 55 oder 51 mit einem Innengwinde 57 angeordnet.

Figur 4b zeigt die Hohlprofile 11, 12, 13 in mit dem Eckverbinderelement 30 verbundenem Zustand.

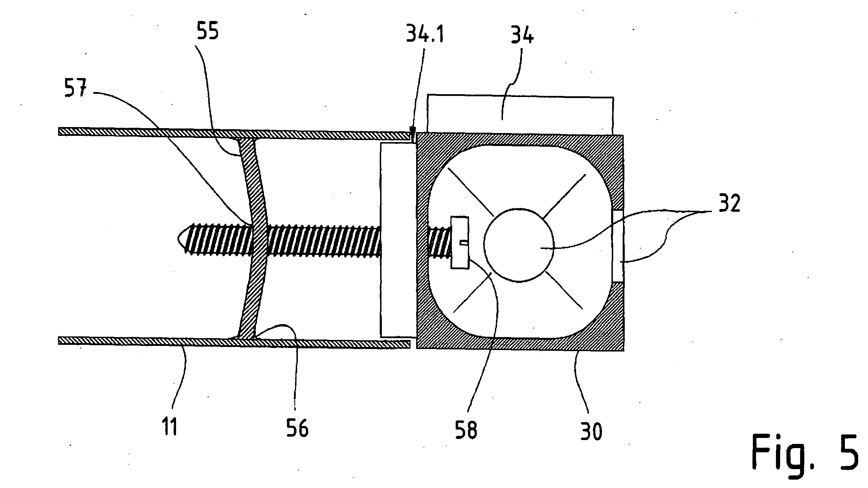

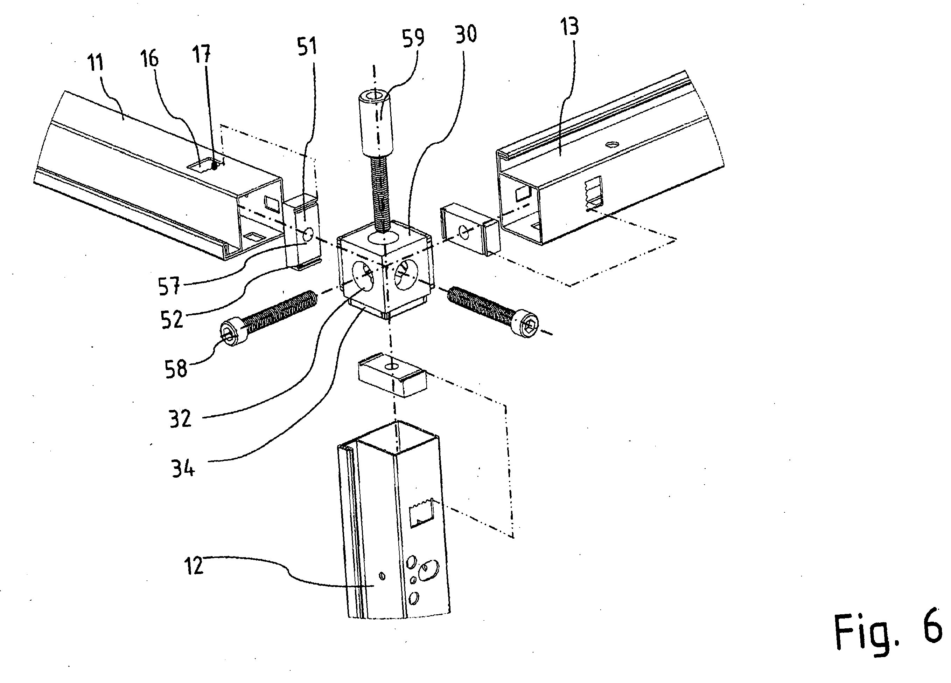

Der genaue Aufbau der Schraubverbindung zwischen den Eckverbinderelementen und den Profilen ist in Figur 5 beispielhaft mit einem fest eingebauten Aufnahmeelement 55 und in Fig. 6 mit einem separat einzusetzenden Aufnahmeelement 51 dargestellt.

Figur 5 zeigt beispielhaft den Aufbau einer Schraubverbindung die nicht Teil der Erfindung ist, zwischen einem Eckverbinderelement 30 und einem Hohlprofil 11. Der Eckverbinderelement 30 weist in allen drei Raumachsen Durchführungsausnehmungen 53 auf, von denen in Figur 5 aus zeichnerischen Gründen nur eine dargestellt ist. Das Eckverbinderelement weist überdies Führungsabsätze 34 auf, die dem Innenquerschnitt der Hohlprofile 11 angepasst und in diese einführbar sind. Im Inneren des Profils 11 ist ein Aufnahmeelement 55 angeordnet, das aus einem mit zwei gegenüberliegenden Innenseiten des Profils 52 über Schweißnähte 56 verschweißten Längsblech besteht, das eine mittig angeordnete Gewindebohrung 57 aufweist. Eine Befestigungseinrichtung 58 in Form einer Schraube ist durch die Durchführungsausnehmung 32 des Eckverbinderelements 30 geführt und in das Gewinde 57 eingeschraubt. Durch Anziehen der Schraube 58 wird eine Vorspannung in das Längsblech 55 eingebracht, die in der Figur 5 durch die gekrümmte Darstellung des im Ursprungszustand geraden Längsblechs 55 dargestellt ist. Durch die Einbringung der Vorspannung ist eine innige und steife Verbindung zwischen dem Eckverbinderelement 30 und dem Profil 11 herstellbar. Die Verbindung wird zusätzlich durch die Außenkanten 34.1 des Eckverbinderelements 30, die dem Innendurchmesser des Profils 52 angepasst sind, gestützt. Insbesondere nehmen die Führungsabsätze 34 orthogonal zur Längsrichtung der Schraubverbindungen gerichtete Scherkräfte auf und gewährleisten so, dass die Schrauben nur auf Zug - belastet werden.

In Figur 5 ist aus Gründen der Klarheit der Abstand zwischen dem Eckverbinderelement 54 und den Innenseiten des Profils 52 übertrieben groß dargestellt. In Wirklichkeit stehen die Absätze 34 in Berührung mit den Innenseiten des Profils 52 und leisten so einen Beitrag zur Stabilisierung der Verbindung.

Fig. 6 zeigt eine Eckverbindung an einem erfindungsgemäßen Schrankgerüst. Die Hohlprofile 11, 12, 13 weisen im Endbereich jeweils zwei an gegenüberliegenden,Seiten eingebrachte Einsatzausnehmungen 16, in die ein Aufnahmeelement 51 eingesteckt werden kann. Zur übersichtlichen Darstellung sind die Aufnahmeelemente 51 direkt neben dem Eckverbinderelement 30 gezeigt. Die Gebrauchslage der Aufnahmeelemente 51 in den Hohlprofilen ist durch die strichpunktierten und mit Pfeil versehenen Linien illustriert. In Gebrauchslage liegen die gezackten Kanten 17 der Einsatzausnehmung 16 in den Nuten 52 des Aufnahmeelements 51. Wird die Schraubverbindung angezogen, so presst sich der Nutgrund auf die Spitzen der Kante 17. Dies führt zu lokal hohen Flächenpressungen, die zu einer gewollten Zerstörung daran anhaftender Lack- oder Schutzschichten führt und eine elektrisch leitfähig Verbindung herstellt.

Während zwei Schraubverbindungen über normale Innensechskantschrauben 58 hergestellt werden, der Köpfe so tief im Eckverbinderelement 30 versenkt aufgenommen werden, dass die Durchführungsausnehmungen 32 in allen Raumachsen frei bleiben, ist die Verbindung mit dem vertikalen Hohlprofil 12 über eine besonders ausgebildete Schraube 59 hergestellt, deren Kopf so groß ausgebildet ist, dass er mit seinem Außenumfang die Durchführungsausnehmung vollständig ausfüllt. Im Kopf ist eine zentrale Ausnehmung vorhanden, die im unteren Bereich einen Innensechskant- oder Innenvielzahnantrieb aufweist und darüber eine Gewindebohrung, die das Einschrauben z.B. eines Haken oder Ringschraube ermöglicht.

## Patentansprüche

1. Geräteträger, aufweisend ein aus metallischen Hohlprofilen (11, 12, 13; 21, 22, 23) gebildetes Schrankgerüst (10, 20), das an mindestens einer seiner Ecken ein quaderförmiges Eckverbinderelement (30) aufweist, das mit mindestens einem der Hohlprofile (11, 12, 13; 21, 22, 23) über eine Schraubverbindung verbunden ist, wobei wenigstens eine Außenseite des Eckverbinderelements (30) als Befestigungsseite (33) ausgebildet sind, die jeweils wenigstens einen Führungsabsatz (34) mit wenigstens zwei parallelen Außenkanten (34.1) aufweist, welche an Innenmantelflächen des Hohlprofils (11, 12, 13; 21, 22, 23) anliegen,
- wobei die Hohlprofile (11, 12, 13; 21, 22, 23) einen geschlossenen Querschnitt aufweisen,
- wobei von jeder Befestigungsseite (33) her eine Durchgangsbohrung (33.1) zur Aufnahme des Schraubenschaftes (58.2, 59.2) ausgeht, die sich ausgehend von einem Auflagerabsatz (33.2) im Inneren des Eckverbinderelements (30) in einer Durchführungsausnehmung (32) fortsetzt, welche sich bis zu einer der Befestigungsseite (33) gegenüber liegenden Außenseite (31) des Eckverbinderelements (30) erstreckt und
- wobei die Schraubverbindung wenigstens eine in Längsrichtung des Hohlprofils (11, 12, 13; 21, 22, 23) auszurichtende Schraube (58, 59) und ein im Inneren des Hohlprofils (11, 12, 13; 21, 22, 23) angeordnetes Aufnahmeelement (51) mit einer Gewindebohrung (57) umfasst, wobei die Schraube (58) mit ihrem Schraubenkopf (58.1), der einen Innenantrieb aufweist, in der Durchführungsausnehmung (32) aufgenommen ist und sich der Schraubenschaft (58.2) ins Innere des Hohlprofils (11, 12, 13; 21, 22, 23) bis zum Aufnahmeelement (55, 51) erstreckt; **dadurch gekennzeichnet,**
**dass** das Aufnahmeelement (51) in zwei Einsatzausnehmungen (16) einsetzbar ist, die im Hohlprofil quer zur Längsachse an gegenüberliegenden Seiten eingebracht sind und die mit zwei Kanten (17) vorgesehen sind, wobei das Aufnahmeelement (51) endseitig wenigstens zwei spiegelbildlich zueinander ausgerichtete Anlagekanten (52) umfasst, die sich in Gebrauchslage gegen die Kanten (17) pressen.

2. Geräteträger nach Anspruch 1, **dadurch gekennzeichnet, dass** die dem Eckverbinderelement (30) benachbarte Kante (17) der Einsatzausnehmungen (16) und/oder die dieser Kante zugewandte Fläche des Aufnahmeelements (51) wenigstens teilweise gezackt ist.

3. Geräteträger nach Anspruch 1 oder 2, **dadurch gekennzeichnet, dass** das Aufnahmeelement eine klammerförmige Konfiguration mit zwei nach innen weisenden Anlagekanten aufweist.

4. Geräteträger nach Anspruch 1 oder 2, **dadurch gekennzeichnet, dass** das Aufnahmeelement eine T-förmige Konfiguration mit zwei nach außen weisenden Anlagekanten aufweist.

5. Geräteträger nach einem der Ansprüche 1 bis 4, **dadurch gekennzeichnet, dass** das Aufnahmeelement (51) zwei Nuten (52) aufweist, deren Weite der Wandstärke des Hohlprofils (11, 12, 13; 21, 22, 23) entspricht.

6. Geräteträger nach einem der vorhergehenden Ansprüche, **dadurch gekennzeichnet, dass** das Eckverbinderelement (30) wenigstens zwei rechtwinklig zueinander ausgerichtete Befestigungsseiten (33) und wenigstens zwei sich kreuzende Durchführungsausnehmungen (32) aufweist, wobei die Tiefe (T) wenigstens einer der Durchführungsausnehmungen (32) zwischen dem jeweiligen Auflagerabsatz (33.2) und der Hüllkurve der kreuzenden Durchführungsausnehmung (32) wenigstens der Höhe des Schraubenkopfes (58.1) entspricht.

7. Geräteträger nach einem der vorhergehenden Ansprüche, **dadurch gekennzeichnet, dass** eine Schraube (59) einen Schraubbolzenkopf (59.1) aufweist, der die Durchführungsausnehmung (32) vollständig ausfüllt und der eine innere Ausnehmung (59.3) aufweist, die an der dem Schraubenschaft (59.2) zugewandten Seite als Innenantrieb ausgebildet ist und darüberliegend wenigstens teilweise mit einem Innengewinde versehen ist.

8. Geräteschrank gemäß einem der vorherigen Ansprüche, **dadurch gekennzeichnet, dass** das Schrankgerüst (10, 20) quaderförmig ist.

9. Geräteschrank nach Anspruch 8, **dadurch gekennzeichnet, dass** an den vier oberen Ecken des quaderförmigen Schrankgerüsts jeweils Eckverbinder angeordnet sind, die mit jeweils drei Profilen über eine Schraubverbindung verbunden sind und dass im unteren Bereich des quaderförmigen Schrankgerüsts ein rechteckiger Grundrahmen (21) vorgesehen ist, dessen vier Ecken jeweils über eine Schweiß- oder Schraubverbindung mit einem senkrecht angeordneten Profil des quaderförmigen Schrankgerüsts verbunden sind.

10. Geräteschrank nach Anspruch 8 oder 9, **dadurch gekennzeichnet, dass** an allen acht Ecken des quaderförmigen Schrankgerüsts jeweils Eckverbinder (30) angeordnet sind, die mit jeweils drei Profilen über eine Schraubverbindung verbunden sind.

11. Geräteschrank gemäß einem Ansprüche 8 bis 10, **dadurch gekennzeichnet, dass** die Eckverbinder (30) würfelförmig sind.

12. Geräteschrank gemäß einem der Ansprüche 8 bis 11, **dadurch gekennzeichnet, dass** dieser wenigstens eine an das Schrankgerüst gehängte Verkleidungsplatte aufweist, wobei
- die Verkleidungsplatte mit wenigstens einer Sicherungslasche versehen ist,
- die Sicherungslasche über eine umlaufende Seitenkante der Verkleidungsplatte hinausragt,
- und die Sicherungslasche auf einer Außenseite des Profils des Schrankgerüstes aufliegt.

## Claims

1. An appliance carrier, having a cabinet frame (10, 20) which is formed from metallic hollow profiles (11, 12, 13; 21, 22, 23) and at least one of the corners of which has a cuboidal corner connecting element (30) which is connected to at least one of the hollow profiles (11, 12, 13; 21, 22, 23) by way of a screw fastening, wherein at least one outer side of the corner connecting element (30) is designed in the form of a fastening side (33) which has at least one guiding shoulder (34) in each case with at least two parallel outer edges (34.1) which rest against inner casing surfaces of the hollow profile (11, 12, 13; 21, 22, 23),
- wherein the hollow profiles (11, 12, 13; 21, 22, 23) have a closed cross-section,
- wherein a through bore (33.1) for receiving the screw shank (58.2, 59.2) starts from each fastening side (33), and continues starting from a support shoulder (33.2) in the interior of the corner connecting element (30) in a feedthrough recess (32) which extends as far as an outer side (31) of the corner connecting element (30) situated opposite the fastening side (33), and
- wherein the screw fastening comprises at least one screw (58, 59) to be orientated in the longitudinal direction of the hollow profile (11, 12, 13; 21, 22, 23) and a receiving element (51) arranged in the interior of the hollow profile (11, 12, 13; 21, 22, 23) and having a threaded bore (57), wherein the screw (58) extends with its screw head (58.1), which has an internal drive, in the feedthrough recess (32) and the screw shank (58.2) extends into the interior of the hollow profile (11, 12, 13; 21, 22, 23) as far as the receiving element (55, 51), **characterized in that**
the receiving element (51) is capable of being inserted into two insertion recesses (16) which are introduced into the hollow profile transversely to the longitudinal axis on opposite sides and which are provided with two edges (17), wherein the receiving element (51) comprises at the ends at least two abutment edges (52) which are orientated in a mirror image with respect to each other and which press against the edges (17) in the position of use.

2. An appliance carrier according to claim 1, **characterized in that** the edge (17) of the insertion recesses (16) adjacent to the corner connecting element (30) and/or the face of the receiving element (51) facing this edge is or are serrated at least in part.

3. An appliance carrier according to claim 1 or 2, **characterized in that** the receiving element has a clamp-shaped configuration with two abutment edges facing inwards.

4. An appliance carrier according to claim 1 or 2, **characterized in that** the receiving element has a T-shaped configuration with two abutment edges facing outwards.

5. An appliance carrier according to any one of claims 1 to 4, **characterized in that** the receiving element (51) has two grooves (52), the width of which corresponds to the wall thickness of the hollow profile (11, 12, 13; 21, 22, 23).

6. An appliance carrier according to any one of the preceding claims, **characterized in that** the corner connecting element (30) has at least two fastening sides (33) orientated at a right angle to each other and at least two intersecting feedthrough recesses (32), wherein the depth (T) of at least one of the feedthrough recesses (32) between the respective support shoulder (33.2) and the envelope curve of the intersecting feedthrough recess (32) corresponds at least to the height of the screw head (58.1).

7. An appliance carrier according to any one of the preceding claims, **characterized in that** a screw (59) has a screw bolt head (59.1) which fills the feedthrough recess (32) completely and which has an internal recess (59.3) which is formed as an internal drive feature on the side facing the screw shank (59.2) and is provided thereabove at least in part with an internal thread.

8. An appliance cabinet according to any one of the preceding claims, **characterized in that** the cabinet frame (10, 20) is cuboidal.

9. An appliance cabinet according to claim 8, **characterized in that** corner connecting means, which are connected to three profiles in each case by way of a screw fastening, are arranged in each case at the four upper ends of the cuboidal cabinet frame, and a rectangular base frame (21), the four corners of which are connected in each case by way of a welding or screw fastening to a vertically arranged profile of the cuboidal cabinet frame, is provided in the lower region of the cuboidal cabinet frame.

10. An appliance cabinet according to claim 8 or 9, **characterized in that** corner connecting means (30), which are connected to three profiles in each case by way of a screw fastening, are arranged at all eight corners of the cuboidal cabinet frame.

11. An appliance cabinet according to any one of claims 8 to 10, **characterized in that** the corner connecting means (30) are cube-shaped.

12. An appliance cabinet according to any one of claims 8 to 11, **characterized in that** it has at least one covering plate suspended on the appliance cabinet, wherein
- the covering plate is provided with at least one securing lug,
- the securing lug projects beyond a continuous lateral edge of the covering plate,
- and the securing lug rests on an outer side of the profile of the appliance cabinet.

## Revendications

1. Porte-appareillage comportant un cadre d'armoire (10, 20) formé de profilés creux métalliques (11, 12, 13 ; 21, 22, 23) qui présente au niveau d'au moins l'un de ses coins, un raccord d'angle (30) parallélépipédique relié à au moins l'un des profilés creux (11, 12, 13 ; 21, 22, 23) via un vissage, sachant qu'au moins un côté extérieur du raccord d'angle (30) est réalisé comme un côté de fixation (33) qui présente respectivement au moins un épaulement de guidage (34) avec au moins deux arêtes extérieures parallèles (34.1) reposant sur des surfaces enveloppes intérieures du profilé creux (11, 12, 13 ; 21, 22, 23),
- sachant que les profilés creux (11, 12, 13 ; 21, 22, 23) présentent une section transversale fermée,
- sachant que depuis chaque côté de fixation (33) part un perçage débouchant (33.1) pour la réception de la tige de vis (58.2, 59.2), lequel se poursuit en partant d'un épaulement d'appui (33.2) à l'intérieur du raccord d'angle (30) en un évidement de passage (32) qui s'étend jusqu'à un côté extérieur (31) opposé au côté de fixation (33) du raccord d'angle (30) et
- sachant que le vissage comporte au moins une vis (58, 59) à orienter dans le sens longitudinal du profilé creux (11, 12, 13 ; 21, 22, 23) et un élément de réception (51) disposé à l'intérieur du profilé creux (11, 12, 13 ; 21, 22, 23) avec un perçage fileté (57), sachant que la vis (58) est reçue par sa tête de vis (58.1) présentant un entraînement intérieur, dans l'évidement de passage (32) et la tige de vis (58.2) s'étend à l'intérieur du profilé creux (11, 12, 13 ; 21, 22, 23) jusqu'à l'élément de réception (55, 51) ; **caractérisé en ce que** l'élément de réception (51) peut être inséré dans deux évidements d'insertion (16) qui sont aménagés dans le profilé creux transversalement à l'axe longitudinal sur des côtés opposés et qui sont prévus avec deux arêtes (17), sachant que l'élément de réception (51) comporte côté extrémité au moins deux arêtes d'appui (52) orientées de manière symétrique l'une à l'autre et se pressant en position d'usage contre les arêtes (17).

2. Porte-appareillage selon la revendication 1, **caractérisé en ce que** l'arête (17) contiguë au raccord d'angle (30) des évidements d'insertion (16) et/ou la surface tournée vers cette arête de l'élément de réception (51) est au moins en partie dentelée.

3. Porte-appareillage selon la revendication 1 ou 2, **caractérisé en ce que** l'élément de réception présente une configuration en forme d'agrafe avec deux arêtes d'appui tournées vers l'intérieur.

4. Porte-appareillage selon la revendication 1 ou 2, **caractérisé en ce que** l'élément de réception présente une configuration en forme de T avec deux arêtes d'appui tournées vers l'extérieur.

5. Porte-appareillage selon l'une quelconque des revendications 1 à 4, **caractérisé en ce que** l'élément de réception (51) présente deux rainures (52), dont la largeur correspond à l'épaisseur de paroi du profilé creux (11, 12, 13 ; 21, 22, 23).

6. Porte-appareillage selon l'une quelconque des revendications précédentes, **caractérisé en ce que** le raccord d'angle (30) présente au moins deux côtés de fixation (33) orientés à angle droit et au moins deux évidements de passage (32) se croisant, sachant que la profondeur (T) d'au moins l'un des évidements de passage (32) entre l'épaulement d'appui (33.2) respectif et la courbe enveloppante de l'évidement de passage (32) concourant correspond au moins à la hauteur de la tête de vis (58.1).

7. Porte-appareillage selon l'une quelconque des revendications précédentes, **caractérisé en ce qu'**une vis (59) comporte une tête de boulon fileté (59.1) qui remplit complètement l'évidement de passage (32) et qui présente un évidement intérieur (59.3) réalisé sur le côté tourné vers la tige de vis (59.2) comme un entraînement intérieur et pourvu au-dessus au moins en partie d'un filetage intérieur.

8. Armoire d'appareillage selon l'une quelconque des revendications précédentes, **caractérisée en ce que** le cadre d'armoire (10, 20) est parallélépipédique.

9. Armoire d'appareillage selon la revendication 8, **caractérisée en ce que** respectivement des raccords d'angle reliés respectivement à trois profilés par un vissage sont disposés aux quatre coins supérieurs du cadre d'armoire parallélépipédique et **en ce qu'**un cadre de base (21) rectangulaire, dont les quatre coins sont reliés respectivement par un soudage ou vissage à un profilé disposé perpendiculairement du cadre d'armoire parallélépipédique, est prévu dans la zone inférieure du cadre d'armoire parallélépipédique .

10. Armoire d'appareillage selon la revendication 8 ou 9, **caractérisée en ce que** respectivement des raccords d'angle (30) reliés respectivement à trois profilés par un vissage, sont disposés sur l'ensemble des huit coins du cadre d'armoire parallélépipédique.

11. Armoire d'appareillage selon l'une quelconque des revendications 8 à 10, **caractérisée en ce que** les raccords d'angle (30) sont en forme de cube.

12. Armoire d'appareillage selon l'une quelconque des revendications 8 à 11, **caractérisée en ce que** celle-ci présente au moins un panneau d'habillage accroché au cadre d'armoire, sachant que
- le panneau d'habillage est pourvu d'au moins une languette de blocage,
- la languette de blocage dépasse d'une arête latérale rotative du panneau d'habillage,
- et la languette de blocage repose sur un côté extérieur du profilé du cadre d'armoire.
